# EUROPÄISCHE PATENTSCHRIFT

(11) **EP 3 784 951 B1**
(45) Veröffentlichungstag und Bekanntmachung des Hinweises auf die Patenterteilung: **24.11.2021**
(21) Anmeldenummer: 19720109.8
(22) Anmeldetag: 24.04.2019
(51) Int. Cl.: F17C 1/16, F17C 1/06

(54) **VERFAHREN ZUR HERSTELLUNG EINES FASERVERSTÄRKTEN DRUCKBEHÄLTERS MIT POLKAPPENVERSTÄRKUNG**
METHOD FOR PRODUCING A FIBRE-REINFORCED PRESSURE VESSEL WITH POLE CAP REINFORCEMENT
PROCÉDÉ DE FABRICATION D'UN RÉCIPIENT SOUS PRESSION RENFORCÉ DE FIBRES À RENFORCEMENT DES CAPUCHONS POLAIRES

(30) Priorität: 26.04.2018 DE 102018110049
(43) Veröffentlichungstag der Anmeldung: 03.03.2021
(73) Patentinhaber: NPROXX B.V., 6422 RK Heerlen (NL)
(72) Erfinder: BÄUMER, Tristan, 51063 Köln (DE)
(74) Vertreter: FARAGO Patentanwälte
(86) Internationale Anmeldenummer: PCT/EP2019/060459
(87) Internationale Veröffentlichungsnummer: WO 2019/206959

(56) Entgegenhaltungen:
- WO-A1-2013/162428
- JP-A- 2006 283 968
- US-A1- 2016 339 632
- US-B2- 9 879 825

## Beschreibung

Die Erfindung betrifft ein Verfahren zur Herstellung eines Druckbehälters, umfassend einen Innenbehälter und eine auf den Innenbehälter gewickelte Außenschicht aus einem Faserwerkstoff.

Aufgrund der weltweiten Anstrengungen, die CO₂-Emmisionen zu reduzieren, werden immer mehr alternative Antriebe für Fahrzeuge entwickelt und auf den Markt gebracht. Ein Trend betrifft die E-Mobilität, bei der neben den batteriebetriebenen Fahrzeugen alternativ auf die Brennstoffzellentechnik gesetzt wird. So gibt es auf dem Gebiet der Fahrzeugentwicklung Bestrebungen, Fahrzeuge aller Art auf Elektroantrieb umzustellen, bei denen die Energie zum großen Teil aus einer Brennstoffzelle geliefert wird. Der dazu notwendige Wasserstoff wird in Hochdrucktanks gespeichert. Um die Gewichtsmassen für diese mobile Anwendung so gering wie möglich zu halten, werden vorzugsweise Druckbehälter vom Typ 4 eingesetzt, insbesondere faserverstärkte Kunststoffliner, wobei vorzugsweise eine CFK-Verstärkung eingesetzt wird.

Diese Behälter bestehen aus einem zylindrischen Mittelteil, an dem sich beidseitig eine gewölbte Polkappe anschließt, die den Druckbehälter verschließt. Ein Herstellungsverfahren für diese Druckbehälter ist das Wickelverfahren (Filament-Winding-Verfahren), bei dem ein Kunststoffliner mit der Innenkontur des Behälters durch das Wickelverfahren mit hochfesten Fasern umwickelt wird. Ein Matrixsystem, dass entweder vorher oder in situ während des Wickelverfahrens auf die Fasern aufgetragen wurde, sorgt durch die Vernetzung untereinander für die Stabilität der Faserverstärkung.

Die Dimensionierung der Faserverstärkung kann dabei grob in zwei Bereiche aufgeteilt werden, und zwar in die Verstärkung des zylindrischen Teils des Druckbehälters und die Verstärkung der gewölbten Polkappen. Natürlich kann die Auslegung nicht voneinander getrennt werden, weil die Kräfte übergreifend anliegen und beide Bereiche ihren Übergangsbereich haben. Der Fachmann weiß jedoch, dass die Faserverstärkung für den zylindrischen Bereich eines Druckbehälters relativ leicht dimensioniert werden kann (Stichwort: Kesselformel). Der Polkappenbereich ist wegen seiner dreidimensionalen Kontur deutlich schwieriger zu dimensionieren.

Problematisch ist dabei insbesondere, die Faserverstärkung im Polkappenbereich zu bestimmen, weil es nicht möglich ist, die Polkappe radial zu verstärken. Eine in radialer Richtung gewickelte Faser würde die gewölbte Polkappe bis auf den Flaschenhals herunterrutschen und dadurch keine Verstärkung erzeugen. Üblicherweise wird eine Polkappenverstärkung daher dadurch realisiert, dass Fasern unter bestimmten Faserwinkeln über den gesamten Behälter gewickelt werden, damit der Polkappenbereich ausreichend verstärkt ist. Diese Fasern verlaufen dann über den kompletten zylindrischen Bereich des Druckbehälters zur gegenüberliegenden Polkappe, um diese in gleicher Weise zu verstärken. Diese Faserlagen sind aber im zylindrischen Bereich zum großen Teil nicht notwendig. Es kommt daher zu einem erhöhten Verbrauch an Fasern, die aber nur im Polkappenbereich genutzt werden.

Da der Faserverbrauch und die damit verbundenen Herstellkosten speziell bei langen Behältern sehr hoch sind, ist es erstrebenswert, den Faserverbrauch reduzieren. Dies ist beispielsweise möglich, wenn es gelingt, die Polkappenverstärkung und die dazu notwendigen Fasern nur im Polkappenbereich eines Liners abzulegen.

Aus dem Stand der Technik sind Verfahren bekannt, die eine gezielte Polkappenverstärkung ermöglichen. Beispielsweise kann ein Polkappenbereich mit einem sogenannten Fiber-Placement-Verfahren verstärkt werden, bevor der eigentliche Wickelprozess durchgeführt wird. Dabei werden vorimprägnierte Faserbänder (Prepregs) von einem Roboter mittels eines Ablegekopfes auf die Polkappen abgelegt. Nachteilig bei diesem Verfahren ist es jedoch, dass es sich um ein gesondertes, vorgeschaltetes Herstellverfahren handelt, bei dem vorimprägnierte Bänder verarbeitet werden. Die eingesetzten Matrixwerkstoffe beim Fiber-Placement-Verfahren und beim anschließenden Wickelverfahren sind ferner unterschiedlich und müssen sich miteinander verbinden können.

Darüber hinaus gibt es andere vorgeschaltete Herstellverfahren, mit denen sich eine Polkappenverstärkung erzeugen lässt. Oftmals werden hierbei Strukturen an einem Liner vorgesehen, an denen aufzuwickelnde Fasern Halt finden, so dass sie nicht abrutschen. Durch eine entsprechende Ausformung und Anordnung solcher Haltestrukturen lassen sich die Polkappen vor dem zylindrischen Bereich eines Druckbehälters bewickeln. Beispielsweise offenbart die JP 2010-236614 A ein Verfahren zur Herstellung eines Verbunddruckbehälters, bei dem an den Polkappen eines Liners Haltestrukturen in Form von umlaufenden Nuten oder einzelnen Noppen ausgebildet sind. Mittels dieser Haltestrukturen werden zunächst die Polkappen bewickelt, anschließend der zylindrische Bereich des Liners. Abgeschlossen wird das Verfahren mit einer Wickelschicht, die sowohl Polkappen als auch zylindrischen Bereich bedeckt.

Derartige Vorgehensweisen mit Haltestrukturen an einem Liner sind vielfältig aus dem Stand der Technik bekannt. Beispielsweise offenbart auch die WO 2013/162428 A1 einen Verbunddruckbehälter, bei dem an einem Liner umlaufende Reihen an abstehenden Stiften vorgesehen sind, um aufzuwickelnde Fasern an einem Abrutschen zu hindern. Die Stifte verbleiben in der resultierenden Faserschicht und werden entweder durch sie abgedeckt, oder die Stifte ragen aus der Faserschicht heraus. Für solche Lösungen müssen jedoch spezielle Liner mit einer Vielzahl von abstehenden Stiften hergestellt werden, was zusätzliche Herstellungsschritte erfordert, was wiederum zu zusätzlichen Handlingprozessen, höheren Fertigungszeiten und höheren Investitionskosten führt. Damit wird es immer schwieriger, die Einsparpotentiale durch die Reduzierung der Fasermengen zu erzielen.

Auch Wickelvorrichtungen mit Haltearmen, welche Fasern beim Wickelprozess an einem Abrutschen hindern sollen, sind bekannt, wobei beispielsweise die JP 2010-167582 zu nennen ist. Auch solche Spezial-Wickelvorrichtungen erhöhen den Herstellungsaufwand,

Aufgabe der Erfindung ist es daher, ein Verfahren zur Herstellung eines faserverstärkten Verbunddruckbehälters bereitzustellen, mit dem sich die Menge an erforderlichen Verstärkungsfasern ohne erhöhten Herstellungsaufwand reduzieren lässt.

Erfindungsgemäß wird diese Aufgabe durch ein Verfahren gemäß dem unabhängigen Anspruch 1 gelöst. Vorteilhafte Weiterbildungen des Verfahrens ergeben sich aus den Unteransprüchen 2-10.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Mit dem erfindungsgemäßen Verfahren lässt sich ein Druckbehälter herstellen, umfassend einen Innenbehälter und eine auf den Innenbehälter gewickelte Außenschicht aus einem Faserwerkstoff. Hierbei können bekannte Materialien für den Innenbehälter und die Außenschicht aus einem Faserwerkstoff verwendet werden. Bei dem Innenbehälter handelt es sich vorzugsweise um einen Kunststoffliner aus einem thermoplastischen Kunststoff, der insbesondere durch Extrusionsblasformen hergestellt sein kann. Als Faserwerkstoff zur Verstärkung des Innenbehälters kann beispielsweise eine Kohlenstoff-, Aramid- oder Glasfaser mit einer geeigneten Matrix aus einem Harz verwendet werden.

Das erfindungsgemäße Verfahren zur Herstellung eines solchen Druckbehälters weist wenigstens die folgenden Schritte auf:
a) Bereitstellen eines Innenbehälters mit einem zylinderförmigen Mittelbereich, der zwei gegenüberliegende Endabschnitte aufweist, deren Öffnungen jeweils mit einem kuppelförmigen Polkappenbereich verschlossen sind;
b) Anbringen einer Haltevorrichtung mit mehreren abstehenden Halteelementen im Bereich eines Endabschnittes des Mittelbereichs des Innenbehälters, wobei die Haltevorrichtung von der Öffnung des Endabschnitts axial beabstandet angebracht wird;
c) Herstellen einer Polkappenverstärkung durch Wickeln von Faserwerkstoff um wenigstens einen Teil des Polkappenbereiches und den Endabschnitt mit der Haitevorrichtung, wobei der Faserwerkstoff mit Richtungsumkehr um die abstehenden Halteelemente der Haltevorrichtung geführt wird;
d) Wickeln einer Umfangswicklung um den Endabschnitt mit der Polkappenverstärkung, wobei die Umfangswicklung zwischen der Öffnung des Endabschnitts und der Haltevorrichtung liegt;
e) Durchtrennen des Faserwerkstoffes der Polkappenverstärkung zwischen der Haltevorrichtung und der Umfangswicklung;
f) Entfernen der Haltevorrichtung;
g) Herstellen einer Außenschicht durch Wickeln von Faserwerkstoff, wobei die Außenschicht den Mittelbereich und die Polkappenbereiche des Innenbehälters umschließt.

Bei dem erfindungsgemäßen Verfahren wird somit eine separate Haltevorrichtung mit mehreren abstehenden Halteelementen verwendet, um mit einem Wickelverfahren eine Polkappenverstärkung herzustellen, bevor die eigentliche Außenschicht ebenfalls mit einem Wickelverfahren hergestellt wird. Dabei ermöglicht es die Haltevorrichtung, die Verstärkungsfasern auf einem Polkappenbereich abzulegen und sie dann im Endabschnitt des Druckbehälterzylinders zu wenden, um die nächste Faserablage zu ermöglichen. Das Verfahren ermöglicht so eine Ablage von Verstärkungsfasern unter den notwendigen Faserwinkeln nur im Polkappenbereich.

Die resultierende Polkappenverstärkung erstreckt sich dann über wenigstens einen Teil des Polkappenbereiches und einen Teil des Druckbehälterzylinders. Diese Polkappenverstärkung wird durch eine Umfangswicklung auf dem betreffenden Endabschnitt des Druckbehälterzylinders fixiert, so dass die Verstärkungsfasern zwischen dieser Umfangswicklung und der Haltevorrichtung durchtrennt werden können. So kann die Haltevorrichtung entfernt und für weitere Polkappenverstärkungen genutzt werden. Die Haltevorrichtung verbleibt somit nicht am Innenbehälter und wird auch nicht in eine Außenschicht integriert. Die Haltevorrichtung ist vielmehr immer wieder für eine neue Polkappenverstärkung einsetzbar.

Eine Polkappenverstärkung wird auf diese Weise an wenigstens einem Polkappenbereich, vorzugsweise aber an beiden Polkappenbereichen eines Kunststoffliners erzeugt. Anschließend kann eine Außenschicht auf herkömmliche Weise auf die Polkappenverstärkungen und den übrigen Bereich des Innenbehälters gewickelt werden, der mit Fasern verstärkt werden soll. Es sind jedoch keine Faserwicklungen mehr erforderlich, um die Polkappen vor dem Übergangsbereich zu dem zylindrischen Mittelteil zu verstärken, so dass der Verbrauch an Fasern gegenüber herkömmlichen Fasern erheblich reduziert ist. Einsparungen von bis zu 20% Fasern sind möglich.

Vorzugsweise ist die Haltevorrichtung dabei ringförmig ausgebildet und umschließt den Mittelbereich des Innenbehälters in einem Endabschnitt vollständig. Es handelt sich um eine Art Kranz, welcher den Innenbehälter umgibt und an diesem fixiert wird. Insbesondere besteht die Haltevorrichtung aus wenigstens zwei Teilabschnitten, die miteinander zu einem Ring verbunden sind. Die Verbindung der beiden Teilringe erfolgt vorzugsweise über eine Schraubverbindung, doch auch andere lösbare Verbindungen können zur Anwendung kommen. Die Teilabschnitte sind so miteinander verbunden, dass sie auf den Innenbehälter gepresst werden können, damit sich die Haltevorrichtung beim Wickelvorgang nicht verschiebt. Durch Lösen der Schraubverbindung können die Teilabschnitte nach der Herstellung einer Polkappenverstärkung voneinander gelöst und von dem Innenbehälter entfernt werden.

Die Halteelemente werden durch mehrere Stifte bzw. Pins gebildet, die unter einem Winkel von 30-80°, insbesondere unter einem Winkel von 45-70° zur Druckbehälterachse von der Haltevorrichtung abstehen. Dabei zeigen die Stifte jeweils zur gegenüberliegenden Polkappe. Die Stifte sind vorzugsweise an ihren Enden spitz zulaufend ausgestaltet. Ferner beträgt die Teilung der Pins beispielsweise ca. 4mm ± 2mm. Nach der Montage der Ringhälften ergibt sich ein geschlossener Ring mit nach außen ragenden Pins. Eine solche ringförmige Haltevorrichtung mit einer Vielzahl von abstehenden Pins wird im Folgenden auch als Pinkranz bezeichnet.

Die Polkappenverstärkung wird so hergestellt, dass in den erforderlichen Bereichen Verstärkungsfasern unter einem bestimmten Winkel abgelegt werden. Dabei kann der gesamte Polkappenbereich bewickelt werden. Allerdings kann der Scheitelbereich einer Polkappe auch durch Wicklungen über den gesamten Innenbehälter von Polkappe zu Polkappe verstärkt werden. In einer bevorzugten Ausführungsform der Erfindung wird der Scheitefbereich daher nicht mit einer gesonderten Polkappenverstärkung versehen, sondern bleibt frei. Die Polkappenverstärkung umgibt dann nur den kritischen Bereich einer Polkappe vor dem Übergang zum zylindrischen Mittelteil.

Werden an beiden Polkappen Haltevorrichtungen angebracht, zeigen ihre abstehenden Stifte jeweils zur gegenüberliegenden Haltevorrichtung. Die daran gewickelten Polkappenverstärkungen können nacheinander oder gleichzeitig hergestellt werden. Sieht einer verwendete Wickelvorrichtung nur eine Faserzuführung vor, wird diese zuerst an einer ersten Polkappe eingesetzt und anschließend an der zweiten Polkappe. Hierzu können die Faserzuführung und/oder der Innenbehälter relativ zueinander verfahren werden.

Besonders vorteilhaft ist es jedoch, wenn die beiden Polkappenverstärkungen gleichzeitig erzeugt werden. So kann der Herstellungsprozess beschleunigt und zusätzliche Handlingschritte können vermieden werden. Der Schritt c) des erfindungsgemäßen Verfahren wird dann gleichzeitig an beiden Polkappenbereichen durch eine Wickelvorrichtung mit wenigstens zwei Faserzuführungen durchgeführt. Eine erste Faserzuführung legt Faserwerkstoff für eine Polkappenverstärkung in einem ersten Polkappenbereich ab, und eine zweite Faserzuführung legt Faserwerkstoff für eine Polkappenverstärkung in einem gegenüberliegenden, zweiten Polkappenbereich ab. Die Rotation des lnnenbehälters und die Relativbewegungen zwischen dem Innenbehälter und der jeweiligen Faserzuführung sind dann entsprechend aufeinander abgestimmt. Vorzugsweise sind die beiden Faserzuführungen dabei auf gegenüberliegenden Seiten des Innenbehälters angeordnet.

Mit einer solchen Wickelvorrichtung mit wenigstens zwei oder mehr Faserzuführungen kann auch die Außenschicht erzeugt werden, die anschließend auf die beiden Polkappenverstärkungen und den Rest des Innenbehälters abgelegt wird. Dies hat den Vorteil, dass mit derselben Wickelmaschine möglichst schnell und effektiv die Polkappenverstärkungen und auch die Außenschicht gewickelt werden können.

Die Polkappenverstärkungen und die Außenschicht können aus dem gleichen Faser-Matrix-System hergestellt werden, so dass keine unterschiedlichen Materialien aufeinander abgestimmt werden müssen. Das erfindungsgemäße Verfahren zur gezielten Polkappenverstärkung setzt somit genau an einer Schwachstelle herkömmlicher Verfahren an. Die Polkappenverstärkung wird mittels des Filament-Winding-Verfahrens erzeugt, mit dem gleichen Material und mit den Verfahren, mit denen der gesamte Druckbehälter verstärkt wird.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: einen Druckbehälter;
- Fig. 2: einen Längsschnitt durch einen Druckbehälter gemäß Fig. 1;
- Fig. 3A-3D: Faserwicklungen unter verschiedenen Winkeln;
- Fig. 4A: eine Seitenansicht eines Polkappenbereiches mit Pinkranz;
- Fig. 4B: einen schematischen Schnitt durch einen Polkappenbereich mit Pinkranz;
- Fig. 5: die Herstellung einer Wicklung für eine Polkappenverstärkung;
- Fig. 6: eine Polkappenverstärkung vor der Entfernung des Pinkranzes;
- Fig. 7: eine Polkappenverstärkung nach der Entfernung des Pinkranzes;
- Fig. 8: einen Längsschnitt durch einen Druckbehälter mit Polkappenverstärkung und Außenschicht;
- Fig. 9: eine erste Ausführungsform einer Wickelvorrichtung beim Wickeln von zwei Polkappenverstärkungen;
- Fig. 10: eine zweite Ausführungsform einer Wickelvorrichtung beim Wickeln einer Außenschicht.

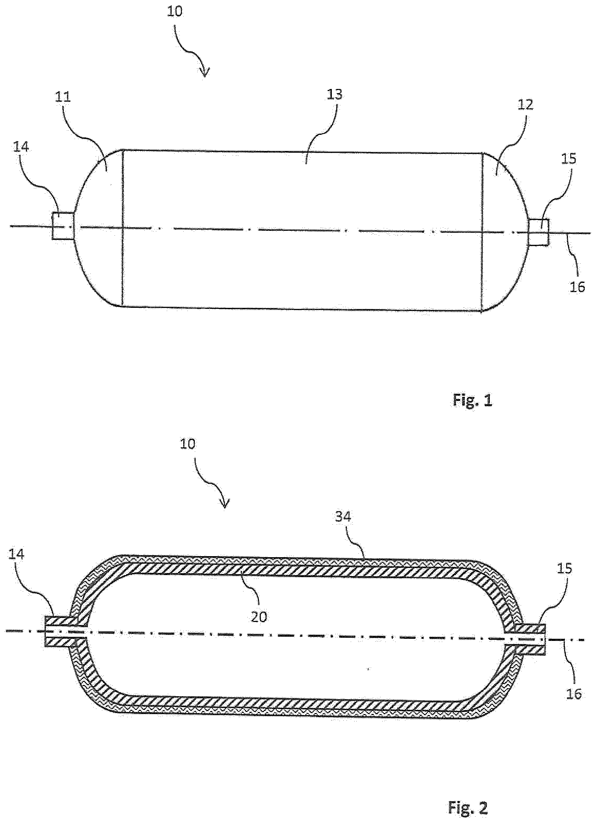

Ein mit dem erfindungsgemäßen Verfahren herzustellender Druckbehälter bzw. Verbunddruckbehäiter ist in Fig. 1 dargestellt. Der Druckbehälter 10 weist einen zylindrischen Mittelteil 13 und zwei gewölbte Polkappen 11 und 12 auf, welche die Öffnungen des zylindrischen Mittelteils 13 abschließen. An diesen Polkappen 11, 12 können abstehende Anschlussflansche 14 und 15 vorgesehen sein, wobei Form und Anordnung dieser Anschlüsse 14, 15 jedoch nur beispielhaft zu verstehen sind. Der zylindrische Mittelteil 13 hat an seinen Enden Endabschnitte, an die sich die gewölbten Polkappen 11, 12 anschließen.

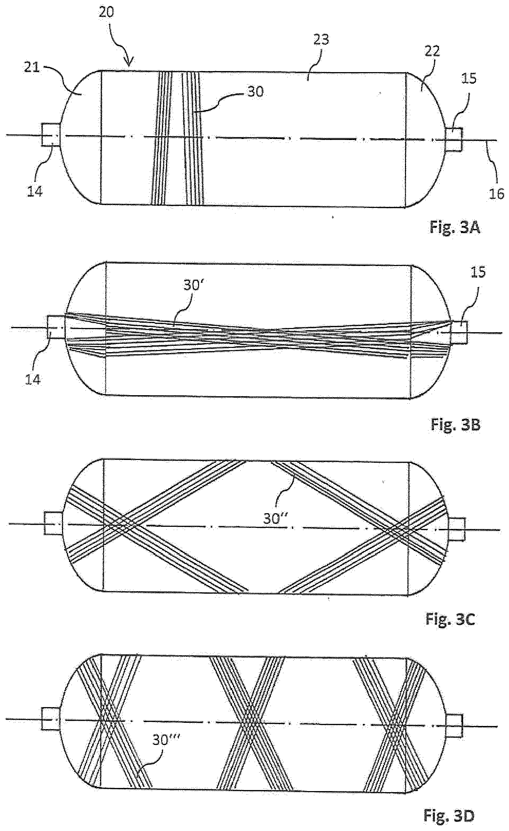

Ein solcher Druckbehälter 10 wird durch Verstärkung eines Innenbehälters mit einer Außenschicht aus Faserverstärkung hergestellt. Fig. 2 zeigt diesen Aufbau des Druckbehälters 10 in einem schematischen Längsschnitt. Dabei ist ein Innenbehälter 20 mit einer Außenschicht 34 aus Verstärkungsfasern umwickelt. Die Form des Innenbehälters 20 entspricht im Wesentlichen der Form des herzustellenden Druckbehälters 10, so dass der Innenbehälter 20 einen zylindrischen Mittelbereich 23 und zwei gewölbte Polkappenbereiche 21 und 22 aufweist, welche die Öffnungen des zylindrischen Mittelbereiches 23 abschließen. Der Innenbehälter 20 wird vorzugsweise durch einen Kunststoffliner gebildet, dessen Form beispielsweise in einem Extrusionsblasverfahren hergestellt wurde. Fig. 3A zeigt einen solchen Innenbehälter 20 mit den genannten Bereichen. Ein solcher Innenbehälter 20 kann mit Verstärkungsfasern unter verschiedenen Winkeln und mit verschiedenen Verläufen bewickelt werden. Fig. 3A zeigt beispielsweise eine Umfangswicklung 30 im Bereich des Mittelbereiches 23. Fig. 3B zeigt eine Wicklung 30', die längs über den gesamten Innenbehälter 20 verläuft und neben den Anschlussflanschen 14 und 15 verläuft. Die Figuren 3C und 3D zeigen Wicklungen 30ʺ und 30‴, die unter einem größeren Winkel zur Wickelachse 16 um den zylindrischen Mittelbereich 23 und die Polkappenbereiche 21, 22 abgelegt sind. Insbesondere die Wicklung 30‴nahe dem Übergang von einem Polkappenbereich 21, 22 zu dem zylindrischen Mittelteil 23 erfordert große Mengen an Fasermaterial, die durch das erfindungsgemäße Verfahren eingespart werden können.

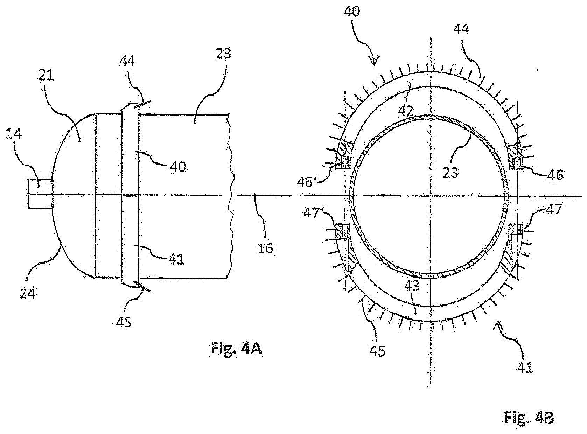

Das erfindungsgemäße Verfahren sieht vor, dass in wenigstens einem Endabschnitt des Mittelbereiches 23 des Innenbehälters 20 eine Haltevorrichtung mit mehreren abstehenden Halteelementen angebracht wird, um eine gezielte Polkappenverstärkung zu wickeln. Vorzugsweise wird auf diese Weise an beiden Polkappen eine Polkappenverstärkung erzeugt. Fig. 4A zeigt eine linke Seite eines Innenbehälters mit einer an seinem zylindrischen Mittelbereich 23 angebrachten Haltevorrichtung. Die Haltevorrichtung wird durch zwei Pinkranzhälften 40 und 41 gebildet, die zu einem Ring miteinander verbunden sind. Fig. 4B zeigt die beiden Pinkranzhälften 40, 41 im gelösten Zustand. Der so gebildete Pinkranz wird auf dem zylindrischen Mittelteil 23 in einem Abstand zum Polkappenbereich 21 angebracht. Beispielsweise erfolgt dies in einem Abstand von ca. 30 mm zum Ende des zylindrischen Mittelteils 23.

Der Pinkranz besteht aus zwei 180°-Ringhälften 42 und 43, die sich über eine Verbindung passgenau verbinden lassen. Die Verbindungsstücke 46, 47 stellen beispielsweise eine erste Schraubverbindung her, während die Verbindungsstücke 46', 47' eine zweite Schraubverbindung herstellen. Der Innendurchmesser des montierten Pinkranzes hat den gleichen Innendurchmesser wie der Außendurchmesser des Innenbehälters 2, sitzt aber mit Druck auf dem Innenbehälter, was durch das Anziehen der Schraubverbindungen erfolgen kann. In jedem Fall sollte der montierte Pinkranz fest auf dem Druckbehälter sitzen und darf bei Belastung durch die auftretenden Fadenspannungen nicht verrutschen.

Beide Ringhälften 42, 43 des Pinkranzes sind mit mehreren spitzen Pins 44, 45 versehen, die unter einem Winkel von 45-70° zur Druckbehälterachse 16 abstehen. Die Teilung der Pins beträgt ca. 4mm ±2mm. Nach der Montage der Pinkranzhälften 40, 41 ergibt sich ein geschlossener Ring mit nach außen ragenden Pins, die jeweils zur gegenüberliegenden Polkappe zeigen.

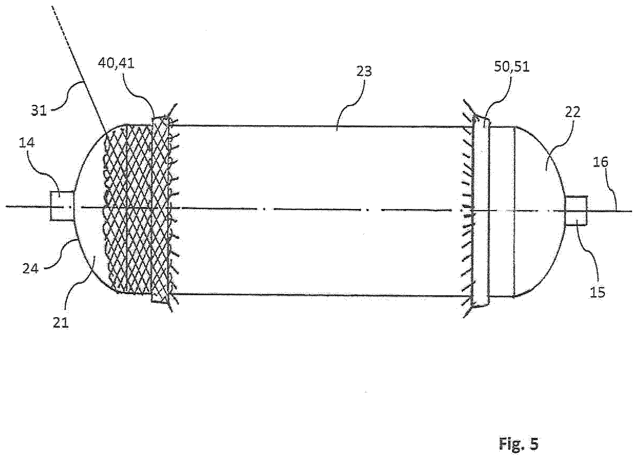

Fig. 5 zeigt die Herstellung einer Polkappenverstärkung, bei der Faserwerkstoff 31 für eine Verstärkung aufgebracht wird. Diese Polkappenbewicklung startet damit, dass die Verstärkungsfasern 31 an dem Innenbehälter 20 oder an dem Pinkranz 40, 41 befestigt werden. Die Bewicklung des Polkappenbereiches 21 erfolgt durch Rotation des Liners und dem NC-gesteuerten Verlegen der Verstärkungsfasern 31 auf dem Polkappenbereich 21 unter dem vorgegebenen Faserwinkel. Die Wende im Polkappenbereich 21 erfolgt über die Ablage der Fasern auf dem geodätischen Pfad. Nachdem die Fasern auf dem Weg zur gegenüberliegenden Polkappe den Pinkranz 40, 41 passiert haben, wird die Axialablage der Verstärkungsfasern unterbrochen und die Fasern durch die Rotation des Innenbehälters an den Pins 44, 45 des Pinkranzes 40, 41 umgelenkt. Durch die Schrägstellung der Pins 44, 45 rutschen die Fasern bis auf den untersten Punkt des Pins in Richtung Innenbehälter. Damit wird gewährleistet, dass die Faserlage gleichmäßig ohne Fehlstellen erfolgt. Die Rotation des Innenbehälters erfolgt so lange, bis die Verstärkungsfasern sicher fixiert sind und der nächste Teilungspunkt der Wickelung erreicht ist. Die Fasern sollten immer um einen oder mehrere Pins herumgelenkt werden, damit eine Fixierung der Fasern stattfindet. Vorzugsweise ist die Wickelung derart auszuführen, dass nur so wenige wie möglich Pins umschlungen werden, weil sich sonst zu viel Fasermaterial hinter den Pins aufbaut.

Die Verstärkungsfasern 31 werden dann wieder in Richtung des zu verstärkenden Polkappenbereiches gelenkt und der nächste Polkappenüberlauf wird gewickelt. Der Prozess wiederholt sich so lange, bis der erforderliche Polkappenbereich belegt ist. Am Ende der Verstärkungswicklung befindet sich das Fadenauge hinter dem Pinkranz auf der gegenüberliegenden Seite des Polkappenbereiches. Wenn eine zweite Polkappenverstärkung mit gleichem oder unterschiedlichem Faserwinkel durchgeführt werden soll, so kann dies unmittelbar erfolgen. Dabei kann ein Scheitelbereich 24 des Polkappenbereiches 21 ausgespart werden, wie es in der Ausführungsform der Fig. 5 gezeigt ist. Dieser Scheitelbereich 24 kann in einer später aufzubringenden Außenschicht 34 aus Faserwerkstoff durch eine Axialverstärkung bewickelt werden, wie sie beispielsweise in Fig. 3D mit der Bezugsziffer 30' gekennzeichnet ist. Eine solche Axialverstärkung 30' ist vorzugsweise ohnehin vorgesehen und verstärkt den Scheitelbereich 24 und hält die Anschlussflansche 14, 15.

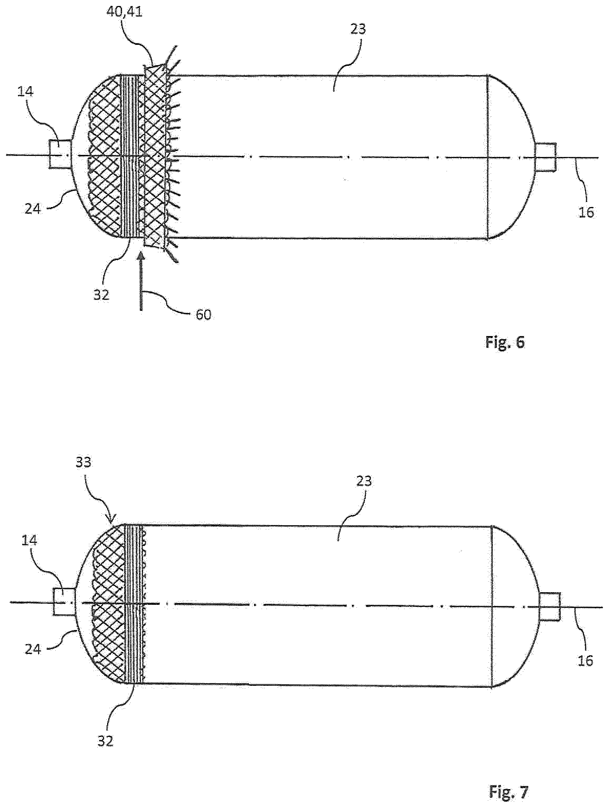

Ist die lokale Polkappenverstärkung abgeschlossen, so wird mit den Verstärkungsfasern eine Fixierung gewickelt, indem die Verstärkungsfasern radial auf dem zylindrischen Absatz des Innenbehälters zwischen Polkappe und Pinkranz gewickelt werden. So ergibt sich die in Fig. 6 gezeigte Umfangswicklung 32. Das Fadenauge führt dazu die Verstärkungsfasern auf die andere Seite des Pinkranzes 40, 41 und lenkt die Fasern auf eine Faserablage in Umfangsrichtung genau auf dem zylindrischen Absatz zwischen Polkappe und Pinkranz. Nach Fertigstellung dieser Fixierlage werden die Fasern der Polkappenverstärkung abgetrennt oder auf den zylindrischen Teil des Innenbehälters mittig zwischen den Polkappen gelenkt und fixiert.

Die verwendete Wickelmaschine geht anschließend in einen Maschinenstopp. Die Fasern der Polkappenverstärkung können nun zwischen dem Pinkranz 40, 41 und dem Polkappenbereich 21 durchtrennt werden, ohne dass der Innenbehälter beschädigt wird. Dies ist in Fig. 6 durch einen Pfeil 60 dargestellt. Dazu wird entweder auf einer Metallunterlage geschnitten, die vor der Montage des Pinkranzes 40, 41 aufgelegt wurde und mit dem Pinkranz später entfernt wird, oder es wird ein Schneidmesser eingesetzt, das die Fasern nach außen schneidet.

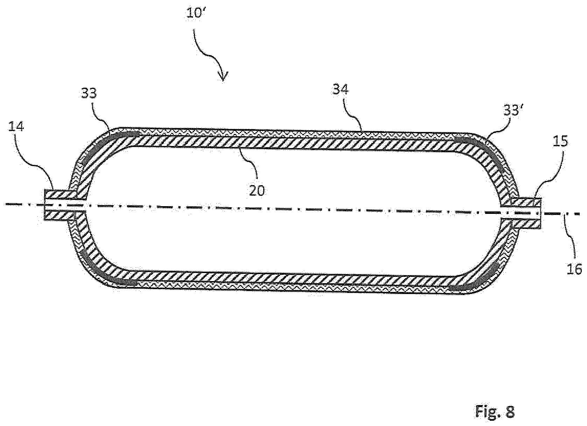

Nach dem Durchtrennen der Polkappen-Verstärkungsfasern wird der Pinkranz geöffnet und vom Innenbehälter abgenommen. Dieser Zustand ist in Fig. 7 gezeigt. Die Verstärkung der gegenüberliegenden Polkappe verläuft identisch zur Verstärkung der ersten Polkappe. Nach der Fertigstellung der Polkappenverstärkungen wird der Rest der Druckbehälterbewicklung durchgeführt. Vorzugsweise wird zuerst der zylindrische Bereich 23 des Innenbehälters mit Umfangslagen versehen, bis sich eine gleichmäßig glatte Oberfläche im zylindrischen Teil des Behälters mit den Polkappenverstärkungen ergeben hat, damit die anschließenden Axialwicklungen einen definierten Ablagegrund haben. Fig. 8 zeigt einen schematischen Längsschnitt durch einen so hergestellten Druckbehälter 10' mit zwei Polkappenverstärkungen 33 und 33' auf dem Innenbehälter 20, die von einen Außenschicht 34 aus Verstärkungsfasern umgeben sind.

Zur Herstellung der Faserwicklungen für die Polkappenverstärkungen und die Außenschicht können geeignete Wickelmaschinen eingesetzt werden, wobei verschiedene Funktionsprinzipien zur Anwendung kommen können. Entstanden ist diese Art der Maschinen ursprünglich aus umgebauten Drehmaschinen; so sind ältere Wickelmaschinen oft einfachen Drehmaschinen ähnlich, bei denen auf dem Längsschlitten die Fadenführung montiert wurde. Diese Bauweise wird bei einfachsten Wickelbauteilen oder Bauteilen mit extremen Längen oder Durchmesser eingesetzt, weil sich eine Bauweise in Bettausführung einfach realisieren lässt.

Werden größere Stückzahlen hergestellt, werden häufig Portalmaschinen eingesetzt, die mehrere Spindeln aufweisen. Von Vorteil ist hierbei, dass diese Maschinen gut zugänglich sind, nach unten offen und leicht zu reinigen sind. Bei der PortalWickelmaschine gleitet ein Schlitten auf einem Träger parallel zur Achse des Wickelkörpers und führt die Fäden NC-gesteuert auf den Wickelkern. Meist sind mehrere Achsen in diesem Schlittensystem integriert: die Y-Achse parallel zur Wickelachse, die Z-Achse, die die Zustellbewegung zur Wickelachse darstellt und eine Drehachse, damit das Band aus Einzelfäden normal zur Oberfläche des Wickelkerns zugeführt werden kann. Da die Verstärkungsfäden meist aus dem Raum hinter der Wickelmaschine zugeführt werden, befindet sich das Fadenauge bei den meisten Maschinen mittig auf Höhe der Wickelachse. Wird viel Augenmerk auf eine gut sichtbare Fadenablage gelegt, werden die Fäden von oben auf den Wickelkern geführt. Damit ist der Ablegepunkt der Verstärkungsfäden auf dem Wickelkern nicht vom Wickelkern verdeckt.

Will man gemäß der Erfindung zwei lokale Polkappenverstärkungen auf die Endbereiche eines Innenbehälters aufwickeln, kann dies einerseits mit der bekannten Wickeltechnik hintereinander durchgeführt werden. Alternativ wird eine Wickelmaschine derart ausgestaltet, dass ein zweiter Schlitten mit identischen Verfahrachsen wie ein erster Schlitten auf der gegenüberliegenden Seite des Innenbehälters vorgesehen wird. Dieser kann parallel zum ersten Schlitten arbeiten und die zweite Polkappenverstärkung zeitgleich ausführen. Dieser zweite Schlitten kann entweder auf der gleichen Längsachsenführung des ersten Schlittens angebracht werden, oder getrennt auf einem separaten Führungssystem. Werden beide Schlittensysteme auf einer gemeinsamen Längsachsenführung montiert, kann es zu Kollisionen kommen, beispielsweise wenn die Programmierung fehlerhaft ausgeführt wurde, oder wenn die lokalen Verstärkungen zu nahe aneinander liegen und sich die Bewegungen der Fadenführungen überschneiden. Vorzugsweise wird daher ein zweites Längsführungssystem für ein zweites unabhängiges Fadenführungs-Schlittensystem auf der gegenüberliegenden Seite der Wickelachse montiert. Damit stehen sich beide Schlittensysteme gesehen von der Wickelachse gegenüber, und sind vollkommen unabhängig voneinander.

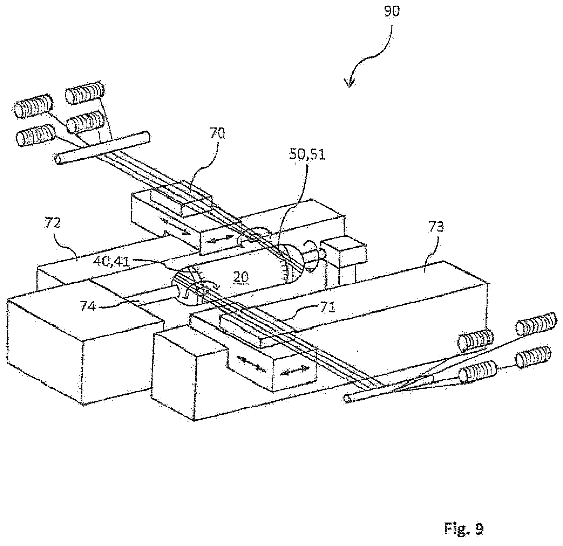

Fig. 9 zeigt eine schematische Darstellung einer möglichen Ausführungsform einer solchen Wickelmaschine 90 in Bettbauweise mit zwei gegenüberliegenden Fadenführungs-Schlittensystemen 70 und 71. Dieses beiden Faserzuführungen 70, 71 sind jeweils parallel zur Wickelachse 74 auf einer Längsachsenführung 72, 73 angebracht. So können an beiden Polkappenbereichen eines Liners 20 Haltevorrichtungen angebracht werden. Fig. 9 zeigt schematisch einen linken Pinkranz mit zwei Pinkranzhälften 40, 41 und einen rechten Pinkranz mit zwei Pinkranzhälften 50, 51. Mit diesen Pinkränzen werden gleichzeitig zwei Polkappenverstärkungen gewickelt. Auch die anschließende Außenschicht kann gleichzeitig mit den zwei Faserzuführungen 70, 71 gewickelt werden.

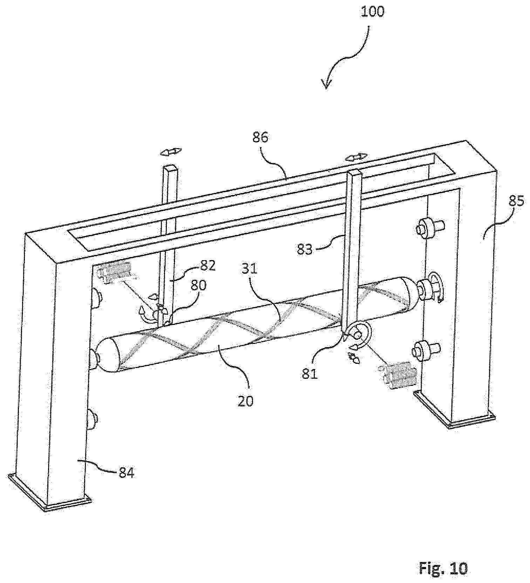

Fig. 10 zeigt das Bewickeln eines Innenbehälters 20 in einer alternativen Wickelmaschine, die als Portalwickelmaschine 100 mit zwei getrennten, hängenden Fadenführungs-Schlittensystemen ausgeführt ist. Das Portal der Vorrichtung wird im Wesentlichen durch zwei Seitenständer 84 und 85 gebildet, die durch einen oberen Querbalken 86 verbunden sind. An diesem Querbalken 86 sind zwei Haltearme 82 und 83 verfahrbar, an deren unterem Ende sich jeweils eine Faserzuführung 80 und 81 befindet, über weiche Faserwerkstoff 31 auf einem Innenbehälter 20 ablegbar ist. Haltearm und Faserzuführung bilden jeweils ein Fadenführungs-Schlittensystem. Werden die beiden Schlittensysteme in die Endposition gebracht, so ist die Zugänglichkeit der Wickelachse in vollem Maße gegeben.

Mit dieser Wickelmaschine 100 lassen sich auch Verstärkungen wie beispielsweise lokale Polkappenverstärkungen bei Druckbehältern bewickeln, aber diese Bauweise ermöglicht auch, die Bewicklung über den kompletten Wickelkörper von beiden Fadenführungssystemen parallel auszuführen. Dazu führt das zweite Fadenführungssystem 83, 81 synchrone Bewegungen aus, die zum Teil in entgegengesetzte Richtungen zum ersten Schlittensystem 82, 80 ausgeführt werden. Damit teilt sich die Bewicklung des Wickelkörpers auf; 50% werden durch das Schlittensystem 82, 80 durchgeführt und 50% durch das Schlittensystem 83, 81. Die Bewicklungszeit für die komplette Bewicklung halbiert sich damit.

### Bezugszeichenliste:

- 10,10': Druckbehälter
- 11,12: Polkappe
- 13: Mittelteil
- 14,15: Anschlussflansch
- 16: Druckbehälterachse
- 20: Innenbehälter, Liner
- 21,22: Polkappenbereich
- 23: Mittelbereich
- 24: Scheitelbereich
- 30,30′,30ʺ,30‴: Faserwicklung
- 31: Faserwerkstoff
- 32: Umfangswicklung, Fixierwicklung
- 33,33': Polkappenverstärkung
- 34: Außenschicht
- 40,41: Pinkranzhälfte
- 42,43: Ringhälfte
- 44,45: Halteelement, Stift, Pin
- 46,46',47,47': Verbindungselement
- 50,51: Pinkranzhälfte
- 60: Trennlinie
- 70,72: Faserzuführung, Fadenführungs-Schlittensystem
- 72,73: Längsachsenführung
- 74: Wickelachse
- 80,81: Faserzuführung, Fadenführungs-Schlittensystem
- 82,83: Haltearm
- 84,85: Seitenständer
- 86: Querbalken
- 90,100: Wickelmaschine

## Patentansprüche

1. Verfahren zur Herstellung eines Druckbehälters (10), umfassend einen Innenbehälter (20) und eine auf den Innenbehälter (20) gewickelte Außenschicht (34) aus einem Faserwerkstoff,
**gekennzeichnet durch** folgende Schritte:
a) Bereitstellen eines Innenbehälters (20) mit einem zylinderförmigen Mittelbereich (23), der zwei gegenüberliegende Endabschnitte aufweist, deren Öffnungen jeweils mit einem kuppelförmigen Polkappenbereich (21;22) verschlossen sind;
b) Anbringen einer Haltevorrichtung mit mehreren abstehenden Halteelementen (44;45) im Bereich eines Endabschnittes des Mittelbereichs (23), wobei die Haltevorrichtung von der Öffnung des Endabschnitts axial beabstandet angebracht wird;
c) Herstellen einer Polkappenverstärkung (33) durch Wickeln von Faserwerkstoff um wenigstens einen Teil des Polkappenbereiches (21;22) und den Endabschnitt mit der Haltevorrichtung, wobei der Faserwerkstoff mit Richtungsumkehr um die abstehenden Halteelemente (44;45) der Haltevorrichtung geführt wird;
d) Wickeln einer Umfangswicklung (32) um den Endabschnitt mit der Polkappenverstärkung (33), wobei die Umfangswicklung (32) zwischen der Öffnung des Endabschnitts und der Haltevorrichtung liegt;
e) Durchtrennen des Faserwerkstoffes der Polkappenverstärkung (33) zwischen der Haltevorrichtung und der Umfangswicklung (32);
f) Entfernen der Haltevorrichtung;
g) Herstellen einer Außenschicht (34) durch Wickeln von Faserwerkstoff, wobei die Außenschicht (34) den Mittelbereich (23) und die Polkappenbereiche (21;22) des Innenbehälters (20) umschließt.

2. Verfahren nach Anspruch 1,
**dadurch gekennzeichnet, dass** die Haltevorrichtung ringförmig ausgebildet ist und den Mittelbereich (23) in einem Endabschnitt vollständig umschließt.

3. Verfahren nach Anspruch 2,
**dadurch gekennzeichnet, dass** die Haltevorrichtung aus wenigstens zwei Teilabschnitten besteht, die miteinander zu einem Ring verbunden sind.

4. Verfahren nach einem oder mehreren der Ansprüche 1 bis 3,
**dadurch gekennzeichnet, dass** die Halteelemente durch mehrere Stifte (44;45) gebildet sind, die unter einem Winkel von 30-80°, insbesondere unter einem Winkel von 45-70° zur Druckbehälterachse (16) von der Haltevorrichtung abstehen.

5. Verfahren nach einem oder mehreren der Ansprüche 1 bis 4,
**dadurch gekennzeichnet, dass** beim Wickeln einer Polkappenverstärkung (33) in Schritt c) der Scheitelbereich (24) eines Polkappenbereiches (21;22) frei von Faserwerkstoff verbleibt.

6. Verfahren nach einem oder mehreren der Ansprüche 1 bis 5,
**dadurch gekennzeichnet, dass** die Schritte b) bis f) an beiden Endabschnitten des Mittelbereiches (23) des Innenbehälters (20) durchgeführt werden.

7. Verfahren nach Anspruch 6,
**dadurch gekennzeichnet, dass** der Schritt c) nacheinander oder gleichzeitig an beiden Polkappenbereichen (21;22) durchgeführt wird.

8. Verfahren nach Anspruch 7,
**dadurch gekennzeichnet, dass** der Schritt c) gleichzeitig an beiden Polkappenbereichen (21;22) durch eine Wickelvorrichtung (90; 100) mit wenigstens zwei Faserzuführungen (70;71;80;81) durchgeführt wird, wobei eine erste Faserzuführung (70;80) Faserwerkstoff für eine Polkappenverstärkung (33) in einem ersten Polkappenbereich (22) und eine zweite Faserzuführung (71;81) Faserwerkstofffür eine Polkappenverstärkung (33) in einem gegenüberliegenden, zweiten Polkappenbereich (22) ablegt.

9. Verfahren nach Anspruch 8,
**dadurch gekennzeichnet, dass** in Schritt g) die Außenschicht (34) ebenfalls durch gleichzeitiges Ablegen von Faserwerkstoff über die wenigstens zwei Faserzuführungen (70;71;80;81) erzeugt wird.

10. Verfahren nach einem oder mehreren der Ansprüche 1 bis 9,
**dadurch gekennzeichnet, dass** der Faserwerkstoff der Polkappenverstärkung (33) dem Faserwerkstoff der Außenschicht (34) entspricht.

## Claims

1. Method of manufacturing a pressure tank (10), comprising an inner container (20) and an outer layer (34) made of a fiber material, which is wound around the inner container (20);
**characterized by** the following steps:
a) providing an inner container (20) with a cylindrical central portion (23), having two opposite end portions the openings of which are each closed by a dome-shaped pole cap portion (21;22);
b) attaching a retention device with several protruding retention elements (44;45) in the area of an end portion of the central portion (23), the retention device being axially spaced from the opening of the end portion;
c) manufacturing a pole cap reinforcement (33) by winding fiber material around at least part of the pole cap portion (21;22) and the end portion with the retention device, the fiber material being guided around the protruding retention elements (44;45) of the retention device with reversal of direction;
d) winding a circumferential winding (32) around the end portion with the pole cap reinforcement (33), the circumferential winding (32) being positioned between the opening of the end portion and the retention device;
e) cutting the fiber material of the pole cap reinforcement (33) between the retention device and the circumferential winding (32);
f) removing the retention device;
g) manufacturing an outer layer (34) by winding fiber material, the outer layer (34) enclosing the central portion (23) and the pole cap portions (21;22) of the inner container (20).

2. Method according to Claim 1,
**characterized in that** the retention device is annular and completely encloses the central portion (23) at an end portion.

3. Method according to Claim 2,
**characterized in that** the retention device consists of at least two portions which are interconnected to form a ring.

4. Method according to one or more of Claims 1 through 3,
**characterized in that** the retention elements are formed by several pins (44;45) which protrude from the retention device at an angle of 30-80°, in particular at an angle of 45-70° from the pressure tank axis (16).

5. Method according to one or more of Claims 1 through 4,
**characterized in that** during the winding of a pole cap reinforcement (33) in step c) the crest (24) of a pole cap portion (21;22) remains free from fiber material.

6. Method according to one or more of Claims 1 through 5,
**characterized in that** the steps b) through f) are performed on both end portions of the central portion (23) of the inner container (20).

7. Method according to Claim 6,
**characterized in that** step c) is performed in both pole cap portions (21;22) sequentially or simultaneously.

8. Method according to Claim 7,
**characterized in that** step c) is performed in both pole cap portions (21;22) simultaneously by means of a winding device (90;100) with at least two fiber feeders (70;71;80;81); with a first fiber feeder (70;80) depositing fiber material for a pole cap reinforcement (33) in a first pole cap portion (22) and a second fiber feeder (71;81) depositing fiber material for a pole cap reinforcement (33) in an opposite, second pole cap portion (22).

9. Method according to Claim 8,
**characterized in that** in step g), the outer layer (34) is also produced by simultaneous depositing of fiber material over the at least two fiber feeders (70;71;80;81).

10. Method according to one or more of Claims 1 through 9,
**characterized in that** the fiber material of the pole cap reinforcement (33) corresponds to the fiber material of the outer layer (34).

## Revendications

1. Procédé de fabrication d'un récipient sous pression (10), comprenant un récipient intérieur (20) et une couche extérieure (34) enroulée sur le récipient intérieur (20) et composée d'un matériau fibreux,
**caractérisé par** les étapes suivantes:
a) mise à disposition d'un récipient intérieur (20) doté d'une partie centrale de forme cylindrique (23) qui présente deux sections terminales opposées dont les ouvertures sont respectivement fermées par une partie capuchon polaire en forme de coupole (21; 22);
b) pose d'un dispositif de retenue comportant plusieurs éléments de retenue saillants (44; 45) au niveau d'une section terminale de la partie centrale (23), le dispositif de retenue étant installé avec un espacement axial par rapport à l'ouverture de la section terminale;
c) réalisation d'un renforcement de capuchon polaire (33) par enroulement de matériau fibreux autour d'au moins une partie de la partie capuchon polaire (21; 22) et de la section terminale dotée du dispositif de retenue, le matériau fibreux étant guidé avec inversion de sens autour des éléments de retenue saillants (44; 45) du dispositif de retenue;
d) enroulement d'une bobine circonférentielle (32) autour de la section terminale dotée du renforcement de capuchon polaire (33), la bobine circonférentielle (32) se trouvant entre l'ouverture de la section terminale et le dispositif de retenue;
e) sectionnement du matériau fibreux du renforcement de capuchon polaire (33) entre le dispositif de retenue et la bobine circonférentielle (32);
f) enlèvement du dispositif de retenue;
g) réalisation d'une couche extérieure (34) par enroulement de matériau fibreux, la couche extérieure (34) entourant la partie centrale (23) et les parties capuchon polaire (21; 22) du récipient intérieur (20).

2. Procédé selon la revendication 1,
**caractérisé en ce que** le dispositif de retenue est réalisé en forme annulaire et entoure entièrement la partie centrale (23) dans une section terminale.

3. Procédé selon la revendication 2,
**caractérisé en ce que** le dispositif de retenue est composé d'au moins deux sous-sections qui sont reliées entre elles en formant un anneau.

4. Procédé selon une ou plusieurs des revendications 1 à 3,
**caractérisé en ce que** les éléments de retenue sont constitués par plusieurs tiges (44,45) qui dépassent suivant un angle de 30 à 80°, en particulier suivant un angle de 45 à 70°, par rapport à l'axe du récipient sous pression (16), du dispositif de retenue.

5. Procédé selon une ou plusieurs des revendications 1 à 4,
**caractérisé en ce que**, lors de l'enroulement d'un renforcement de capuchon polaire (33) dans l'étape c), la partie sommitale (24) d'une partie capuchon polaire (21; 22) reste exempte de matériau fibreux.

6. Procédé selon une ou plusieurs des revendications 1 à 5,
**caractérisé en ce que** les étapes b) à f) sont réalisées au niveau des deux sections terminales de la partie centrale (23) du récipient intérieur (20).

7. Procédé selon la revendication 6,
**caractérisé en ce que** l'étape c) est réalisée successivement ou simultanément au niveau des deux parties capuchon polaire (21; 22).

8. Procédé selon la revendication 7,
**caractérisé en ce que** l'étape c) est réalisée simultanément au niveau des deux parties capuchon polaire (21; 22) par un dispositif de bobinage (90; 100) comportant au moins deux dispositifs d'acheminement de fibres (70; 71; 80; 81), un premier dispositif d'acheminement de fibres (70; 80) déposant du matériau fibreux pour un renforcement de capuchon polaire (33) dans une première partie capuchon polaire (22) et un second dispositif d'acheminement de fibres (71; 81) du matériau fibreux pour un renforcement de capuchon polaire (33) dans une seconde partie capuchon polaire (22) opposée.

9. Procédé selon la revendication 8,
**caractérisé en ce que**, dans l'étape g), la couche extérieure (34) est également générée par dépôt simultané de matériau fibreux par les au moins deux dispositifs d'acheminement de fibres (70; 71; 80; 81).

10. Procédé selon une ou plusieurs des revendications 1 à 9,
**caractérisé en ce que** le matériau fibreux du renforcement de capuchon polaire (33) correspond au matériau fibreux de la couche extérieure (34).
